# EUROPEAN PATENT SPECIFICATION

(11) **EP 4 587 298 B1**
(45) Date of publication and mention of the grant of the patent: **22.04.2026**
(21) Application number: 23755493.6
(22) Date of filing: 04.08.2023
(51) Int. Cl.: B60N 2/06, B60N 2/14

(54) **A MOTOR-VEHICLE SEAT ROTATABLY MOUNTED AROUND A VERTICAL AXIS**
KRAFTFAHRZEUGSITZ, DER UM EINE VERTIKALE ACHSE DREHBAR GELAGERT IST
SIÈGE DE VÉHICULE AUTOMOBILE MONTÉ ROTATIF AUTOUR D'UN AXE VERTICAL

(30) Priority: 14.09.2022 IT 202200018837
(43) Date of publication of application: 23.07.2025
(73) Proprietor: C.R.F. Società Consortile per Azioni, 10043 Orbassano (Torino) (IT)
(72) Inventor: MASOERO, Giorgio Luigi, 10043 Orbassano (Torino) (IT); STOLCIS, Luca, 10135 Torino (IT); LA MONTAGNA, Filippo, 10135 Torino (IT); BRANCACCIO, Claudio, 10135 Torino (IT); MURRU, Ivan Emanuel, 10043 Orbassano (Torino) (IT)
(74) Representative: Buzzi, Notaro & Antonielli d'Oulx S.p.A.
(86) International application number: PCT/IB2023/057896
(87) International publication number: WO 2024/057112

(56) References cited:
- DE-A1- 102015 109 550
- FR-A1- 2 977 202
- JP-A- S56 128 233

## Description

### Field of the invention

The present invention relates to motor-vehicle seats of the type comprising a seat frame rotatably mounted about a vertical axis on a motor-vehicle floor.

### Prior art

Various types of motor-vehicle seats have already been proposed in the past, which are supported by the floor in a rotatable manner around a vertical axis, for example, for the purpose of orienting a front seat towards the rear seats, to create a seating area inside the passenger compartment of the motor-vehicle, or again to facilitate getting off the motor-vehicle or getting on the motor-vehicle for disabled persons.

Documents FR2977202**,** DE102015109550**,** JPS56128233 and US11208012 disclose respective solutions of a seat rotatably mounted around a vertical axis on a motor-vehicle floor.

In all the solutions already proposed which are known to the Applicant, the seat frame is specifically modified for the interface with a respective frame portion of the motor-vehicle, to allow rotation about the aforesaid vertical axis. For this reason, motor-vehicle manufacturers must diversify the production of seats *a priori* according to the final application, in particular, according to a standard fixed configuration on the floor, or a motor-vehicle interior configuration with a rotatable seat.

In view of the above, the present invention starts from the desire to propose a motor-vehicle seat which can overcome the aforesaid drawbacks, and which - at the same time - is particularly simple and economical to manufacture, as well as fulfilling the safety requirements.

### Object of the invention

The object of the present invention is, therefore, to make a seat available inside the passenger compartment of a motor-vehicle that is rotatably mounted around a vertical axis, which keeps the seat structure unchanged and which allows rotation to be carried out with a simple and cheap-to-make mechanism.

### Summary of the invention

According to one or more embodiments, the above-mentioned objects are achieved through a motor-vehicle seat having the characteristics specifically set forth in the independent claim 1.

Further advantageous characteristics of the invention are defined in the dependent claims and explained in the description that follows.

### Brief description of the figures

Further characteristics and advantages of the invention will become apparent from the description that follows with reference to the attached drawings, provided purely by way of non-limiting example, wherein:
- Figure 1 is a perspective view of a motor-vehicle floor on which a seat according to the invention is mounted,
- Figure 2 is a schematic front view of the seat according to a preferred embodiment of the invention,
- Figure 3 is an enlarged scale view illustrating some components of the previous figure,
- Figure 4 is a schematic front view of a support structure fixed to the floor and connected to the seat frame,
- Figures 5A, 5B are plan views of the support structure, according to two different operating conditions,
- Figure 6 is a view similar to Figure 4, which illustrates the support structure according to a further operating condition,
- Figures 7, 8 are a perspective view and a front view illustrating the support structure according to further embodiments, and
- Figures 9A, 9B are plan views illustrating the support structure of Figure 8, according to two different operating conditions.

The references illustrated here are only for convenience and do not, therefore, delimit the scope of the present invention.

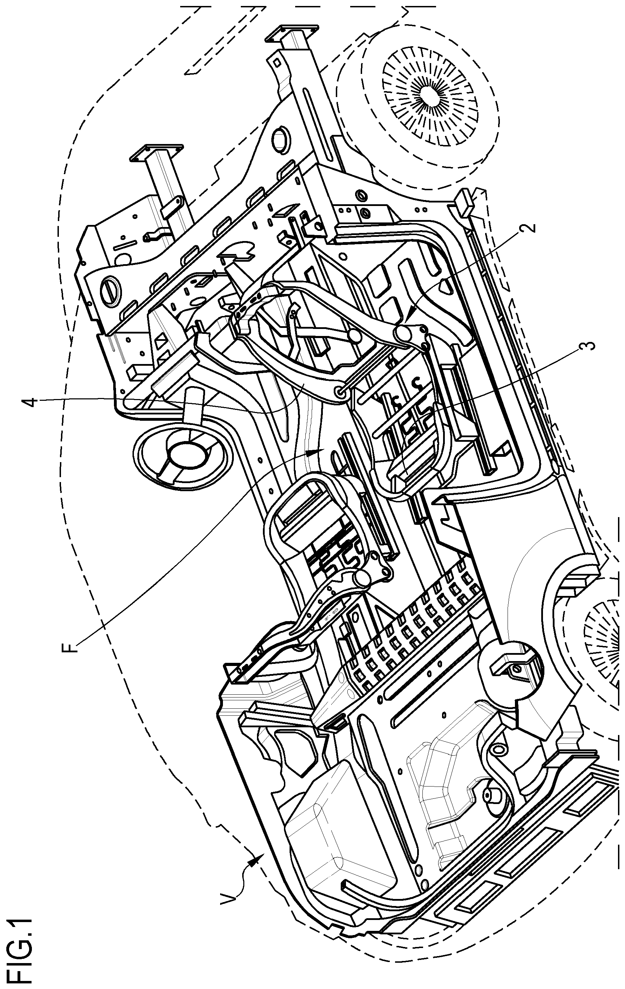

In Figure 1, the reference number 1 indicates - in its entirety - a motor-vehicle seat comprising a seat frame 2 defining a cushion portion 3 and a backrest portion 4, made in any known way.

According to the present invention, the seat frame 2 is rotatably mounted around a vertical rotation axis Z on a floor F of a motor-vehicle V. As illustrated in Figure 1, the seat 1 is rotatable around the aforesaid rotation axis Z to achieve a rotated configuration - for example by 180° - with respect to the conventional position.

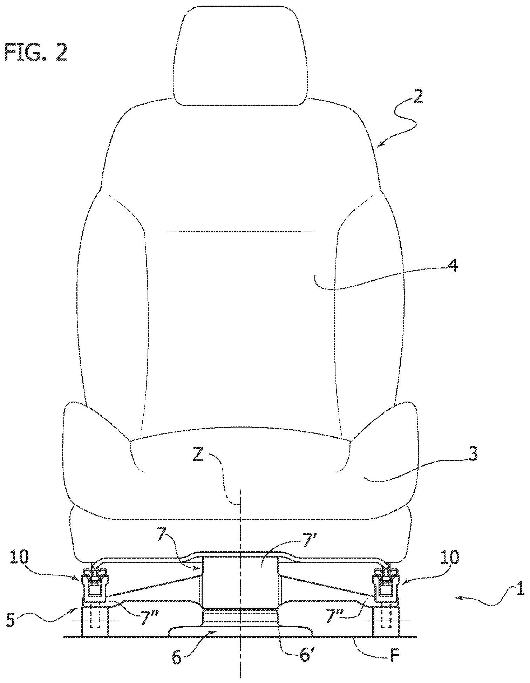

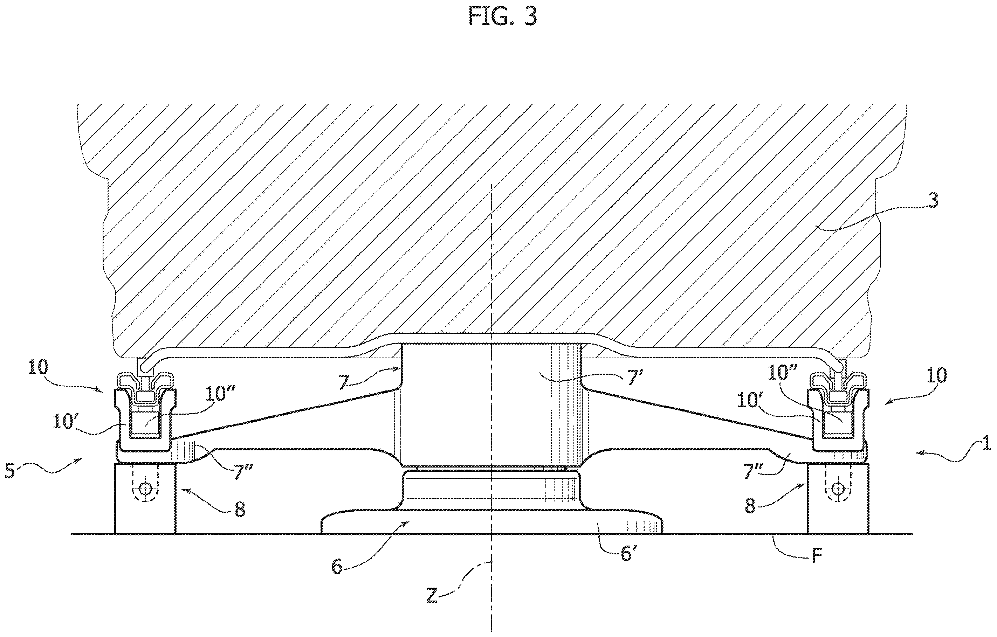

As illustrated in Figures 2, 3, the cushion portion 3 is connected at its lower part to a support structure 5. The support structure 5 comprises a base portion 6 fixed to the floor F and a rotating platform 7 carrying the seat frame 2 and rotatably mounted on the base portion 6 around the aforesaid vertical rotation axis Z.

According to the invention, the base portion 6 comprises a substantially plate-shaped element 6' anchored to the floor F, from which a column-shaped portion 6" protrudes centrally, carrying the rotating platform 7. Still according to the invention illustrated in the attached figures, the rotating platform 7 comprises a central body 7' engaged with the base portion 6, in particular with the aforesaid column portion 6". Peripheral portions 7" of the rotating platform 7 extend from the central body 7', configured for supporting the cushion portion 3 of the seat 1. Preferably, the central body 7' and the peripheral portions 7" of the rotating platform 7 are made in a single piece.

According to an important characteristic of the invention, the support structure 5 comprises mutually engaging locking means 8, capable of locking the rotating platform 7 on the floor F in a rotated position with respect to an initial position corresponding to the conventional position of the seat 1. The seat 1 also comprises deactivation means 9 associated with the locking means 8, arranged to release the locking means 8 and allow rotation of the seat 1 around the aforesaid vertical rotation axis Z. The details relating to the locking means 8 and to the deactivation means 9 are indicated below in the present description.

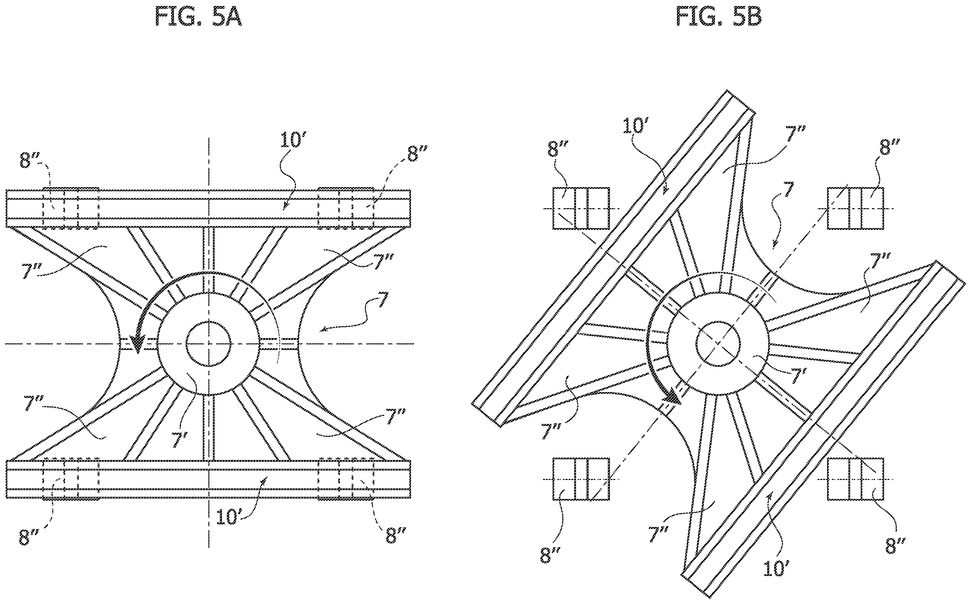

According to a unique characteristic of the invention, illustrated in Figures 2, 3, the seat frame 2 - in particular the cushion portion 3 - is connected at its lower part to the rotating platform 7 at guide means 10 for adjusting the position of the seat 1 with respect to the floor F in the longitudinal direction of the motor-vehicle V. The guide means 10 comprise a pair of fixed guides 10' formed on opposite sides of the rotating platform 7 and a pair of movable guides 10" rigidly connected to the cushion portion 3 and slidably mounted on the fixed guides 10'. In other words, the rotating platform 7 supports the seat frame 2 at its peripheral portions 7", along which the fixed guides 10' are formed, while the central body 7' is not in contact with the cushion portion 3 of the seat frame 2. Thanks to these characteristics, the seat 1 is configured as rotatable around the aforesaid vertical axis Z, without having to modify the cushion portion 3 with respect to a normally produced seat having the cushion portion rigidly connected to a pair of movable guides arranged to slide within respective fixed guides anchored to the floor. With reference to the elevation views of Figures 5A, 5B, it should be noted that the fixed guides 10' extend longitudinally along the sides of the rotating platform 7. As previously stated, the rotating platform 7 can be made in a single piece.

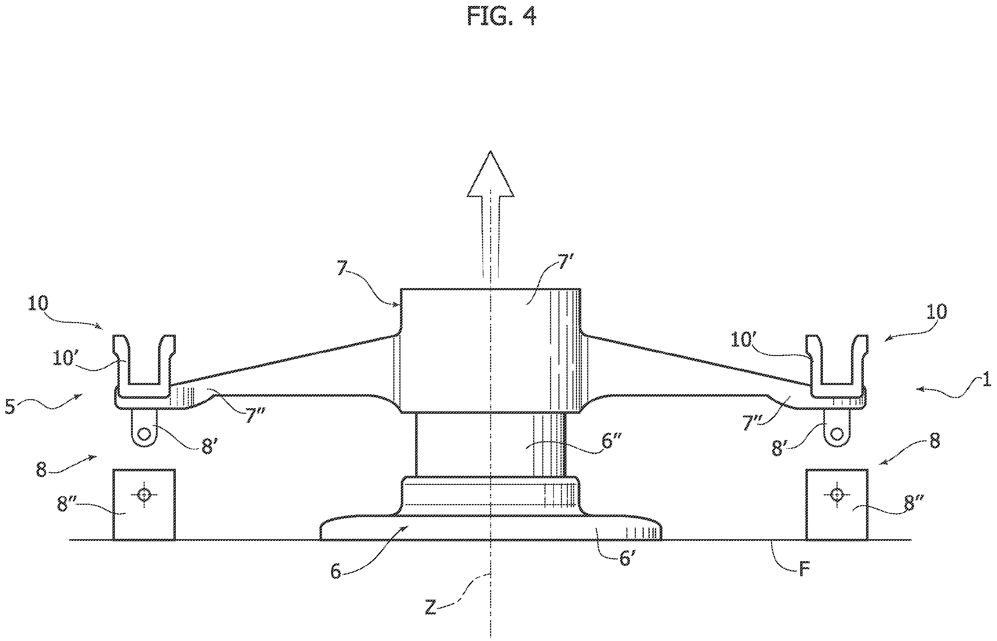

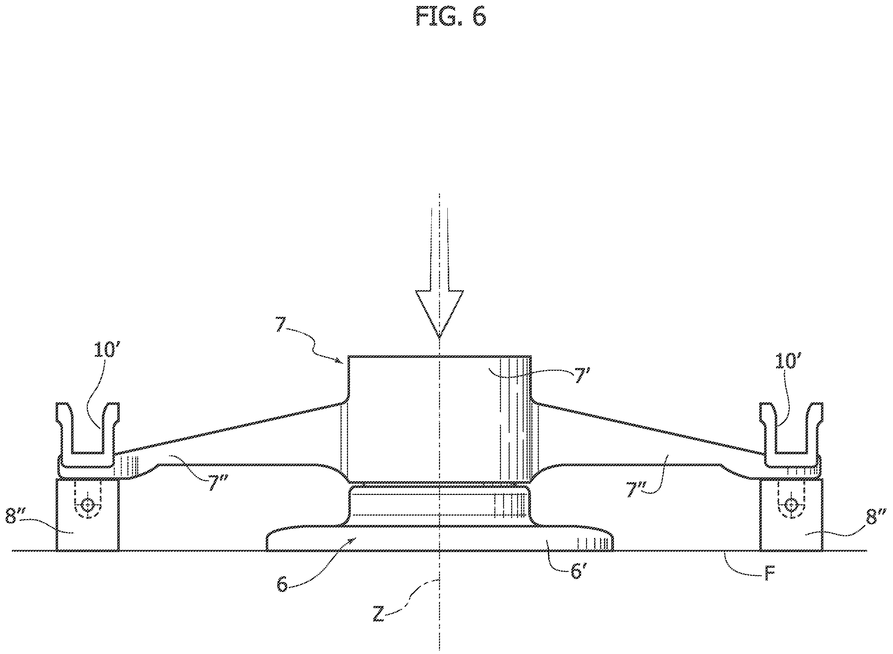

According to a further characteristic of the invention, illustrated in Figures 4, 6, the support structure 5 is configured to allow a vertical translation of the rotating platform 7 - along the aforesaid axis Z - with respect to the base portion 6, to be carried out beforehand and following the rotation of the seat 1, respectively away (Figure 4) and towards (Figure 6) the floor F. In one or more embodiments, the central body 7' of the rotating platform 7 is, therefore, configured to slide axially upwards or downwards with respect to the base portion 6, in particular, on the aforesaid column portion 6". The upward movement of the rotating platform 7, and therefore of the entire seat 1, allows overcoming any components of the motor-vehicle V that impede the rotation of the seat itself around the vertical axis Z, such as, for example, the longitudinal member of the body. Therefore, following actuation of the deactivation means 9 to release the locking means 8, the seat 1 can be translated along the vertical axis Z, away from the floor F, before carrying out the rotation maneuver. Once the rotation maneuver has been carried out, by selecting a determined operating fixing position (among those available, thanks to the locking means 8 described below), the rotating platform 7 and, therefore, the whole seat 1 translates downwards in the direction of the floor F, to allow the locking of the seat 1 in a rotated position with respect to a position of normal use. The vertical translation movement may be facilitated by an elastic system with spring means mounted on the column portion 6" and/or by a kinematic mechanism included within the base portion 6. In one or more embodiments, the locking means 8 comprise a plurality of abutment members 8', mutually engageable with respective latch elements 8" comprising snap means for locking the abutment members 8' by interference. The latch elements 8" therefore comprise a cavity within which the respective abutment member 8' can be locked. The abutment members 8' and the latch elements 8" may be made in any known way, for example, similarly to the latch units for motor-vehicle doors. Each latch element 8" is arranged vertically aligned with a respective abutment member 8', so that following the vertical translation of the rotating platform 7, away from or towards the floor F, they can be mutually released or locked.

According to the embodiment illustrated in Figures 4-6, the abutment members 8' are carried by the rotating platform 7 and the latch elements 8" protrude vertically from the floor F towards the abutment members 8'. More specifically, the abutment members 8' protrude from a lower face of the rotating platform 7, below the fixed guides 10' formed on the sides of the rotating platform 7. In accordance with this embodiment, the rotating platform 7 may comprise two pairs of abutment members 8', the abutment members 8' of each pair being spaced apart along one of the sides of the rotating platform 7, for example, at opposite ends of a respective side, below the fixed guides 10'. As illustrated in Figures 5A, 5B, four latch elements 8" can be arranged on the floor F, forming a square arrangement. Therefore, according to this configuration, the seat 1 may be locked in a position rotated by 90° or 180°, or 270°, with respect to the position of normal use. Of course, the number and arrangement of the latch elements 8" and of the abutment members 8' may vary with respect to what is illustrated in Figures 5A, 5B, for example, by providing only one abutment member 8' on each side of the rotating platform 7 and corresponding latch elements 8" protruding from the floor F, to obtain only one configuration rotated by 180° with respect to the position of normal use.

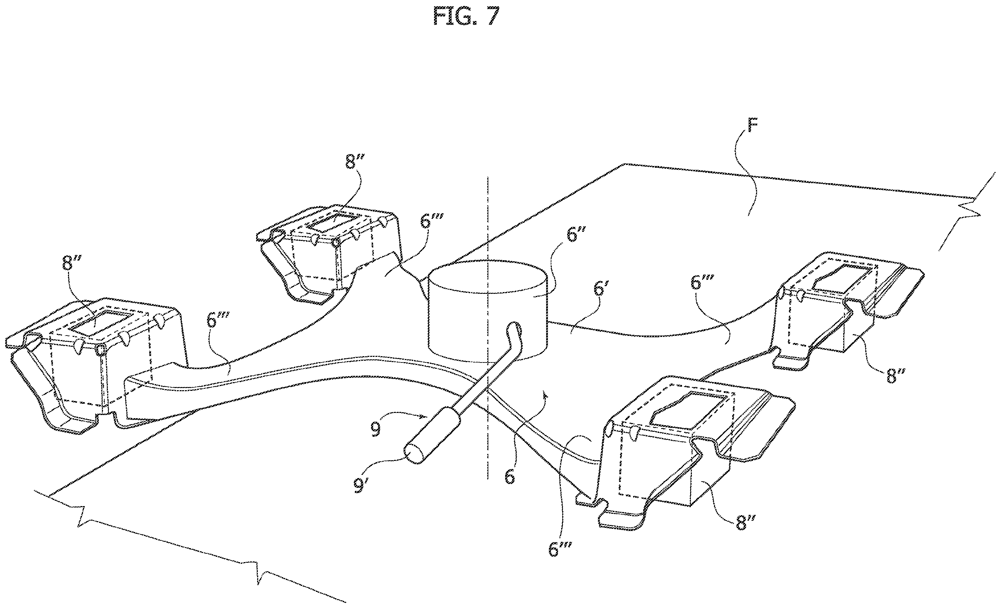

Figure 7 illustrates a concrete embodiment of the base portion 6 fixed on the floor F. According to the embodiment illustrated in this figure, the latch elements 8" are integrated on the base portion 6 of the support structure 5. Similarly to what has been said previously for Figures 4-6, the abutment members 8' are instead carried by the rotating platform 7, to be mutually engageable with the latch elements 8". According to this embodiment, the latch elements 8" are spaced apart in a square arrangement, at the vertices of the plate element 6' of the base portion 6. Alternatively, they are spaced apart in a rectangle arrangement. Preferably, the plate element 6' defines respective arms 6‴ extending from the central column-shaped portion 6" to the respective latch element 8", forming a square arrangement of the latch elements 8". According to the specific configuration illustrated in Figure 7, the latch elements 8" are arranged at the vertices of the base portion 6 at respective support elements of the base portion 6, intended to support respective peripheral portions of the upper rotating platform 7. Alternatively, the latch elements 8" may respectively be arranged in different positions with respect to the aforesaid support elements.

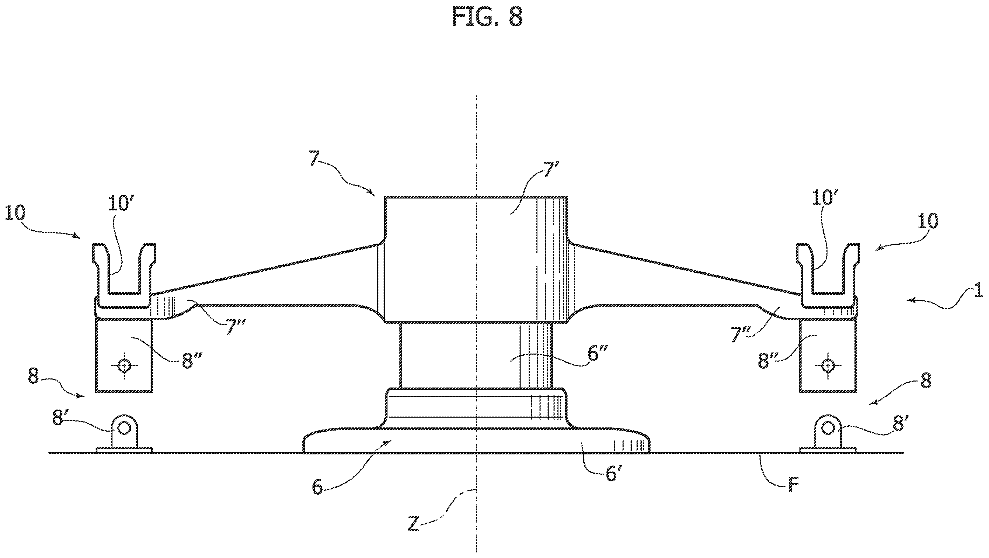

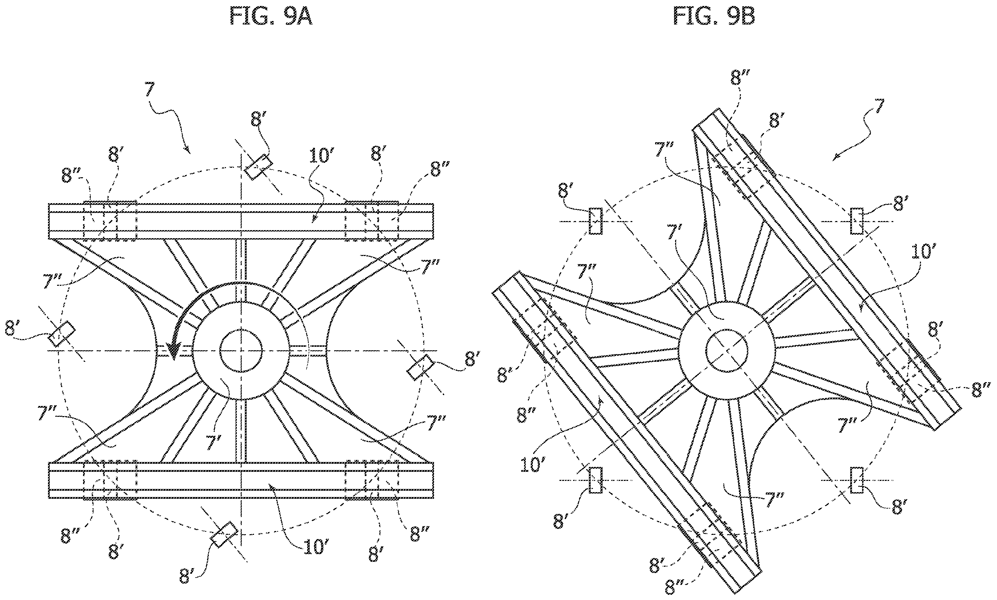

According to the embodiment illustrated in Figures 8-9B, the latch elements 8" are carried by the rotating platform 7, and the abutment members 8' protrude vertically from the floor F towards the latch elements 8". More specifically, the latch elements 8" protrude from a lower face of the rotating platform 7, below the fixed guides 10' formed on the sides of the rotating platform 7. In accordance with this embodiment, the rotating platform 7 may comprise two pairs of latch elements 8", the latch elements 8" of each pair being spaced apart along one of the sides of the rotating platform 7, for example, at the opposite ends of a respective side, below the fixed guides 10'. As illustrated in Figures 9A, 9B, a plurality of abutment members 8' may be arranged on the floor F, forming a circumferential-shaped fastening path. Preferably, the abutment members are spaced apart by an angle of 45°, in such a way that the rotating platform 7 - and therefore the seat frame 2 - can be locked in intermediate rotated positions, with respect to rotations of 90°, for example, with positions rotated by 45° or 135° with respect to the position of normal use. Of course, the number and arrangement of the abutment members 8' and of the latch elements 8" may vary with respect to what is illustrated in Figures 9A, 9B, for example, by providing only one latch element 8" on each side of the rotating platform 7 and corresponding abutment members 8' protruding from the floor F, to obtain only one configuration rotated by 180° with respect to the position of normal use.

As previously indicated, the seat 1 also comprises deactivation means 9 associated with the locking means 8, arranged to release the locking means 8 and allow rotation of the seat 1 around the aforesaid vertical rotation axis Z. More specifically, the deactivation means 9 actuate the latch elements 8" to release the respectively engaged abutment members 8'.

According to a preferred embodiment, the deactivation means 9 are of the mechanical type, and comprise a manually operated release command 9', for example, a lever, comprising a mechanical command transmission device (Bowden cable). In Figure 7, the deactivation means 9 are integrated into the base portion 6, which carries the latch elements 8" intended to cooperate with the respective abutment members 8' carried by the rotating platform 7. Alternatively, according to an equally applicable configuration, the deactivation means 9 are integrated into the base portion 6, which carries the abutment members 8' intended to cooperate with the respective latch elements 8" carried by the rotating platform 7. According to a further embodiment, the deactivation means 9 are integrated into the rotating platform 7, which carries the latch elements 8" intended to cooperate with the respective abutment members 8' protruding from the floor F.

In other embodiments, the deactivation means 9 are of the hydraulic or pneumatic type.

Whatever the configuration of the deactivation means 9, following the release of the locking means 8, the vertical translation and rotation maneuver of the rotating platform 7 may be performed manually, by selecting the required rotated seat configuration.

According to alternative embodiments, the entire rotation maneuver of the seat frame 2, including that of raising and lowering the rotating platform 7 with respect to the base portion 6, may be performed in a completely automatic way with the aid of actuators of any known type, for example, electric. In this case, the maneuver may be controlled by means of manual control means, for example, push-button means, integrated in the structure of the seat itself.

As is evident from the foregoing description and from the attached drawings, the motor-vehicle seat 1 is rotatably mounted around a vertical axis Z on the floor F of the motor-vehicle V, keeping the seat structure unchanged with respect to a conventional seat, and allowing rotation with a simple and intuitive mechanism.

Of course, without prejudice to the principle of the invention, the details of construction and the embodiments may vary widely with respect to those described and illustrated purely by way of non-limiting example, as long as they remain within the scope of the present invention, as defined by the attached claims.

## Claims

1. A motor-vehicle seat (1) comprising a seat frame (2) rotatably mounted about a vertical axis (Z) on a motor-vehicle floor (F),
- wherein said frame (2) comprises a cushion portion (3) and a backrest portion (4), the cushion portion (3) being connected at its lower part to a support structure (5) comprising a base portion (6), which can be secured to the floor (F), and a rotating platform (7) carrying the seat frame (2) and rotatably mounted on the base portion (6) around said vertical axis (Z),
- wherein the base portion (6) comprises a substantially plate-shaped element (6'), which can be anchored to the floor (F), from which a column portion (6") protrudes centrally, carrying the rotating platform (7); the rotating platform (7) comprising a central body (7') engaged with the column portion (6"), from which peripheral portions (7") extend, configured for supporting the cushion portion (3),- wherein said support structure (5) comprises mutually engaging locking means (8) configured for locking the rotating platform (7) at a rotated position with respect to a position of normal use of the seat (1), deactivation means (9) being associated with said locking means (8), for releasing the locking means (8) and allowing rotation of the seat frame (2),
- wherein the support structure (5) is configured to enable a vertical translation of the rotating platform (7) with respect to the base portion (6), along said vertical axis (Z), to be carried out preliminarily and subsequently to the rotation of the seat (1), respectively moving away and approaching the floor (F),
- wherein the seat frame (2) is connected at its lower part to the rotating platform (7) at guide means (10) for adjusting the position of the seat (1) with respect to the floor (F) along the longitudinal direction of the motor-vehicle (V), said guide means (10) comprising a pair of fixed guides (10') obtained at opposite sides of the rotating platform (7), and a pair of movable guides (10") rigidly connected to the cushion portion (3) and slidably mounted on the fixed guides (10'),
**characterized in that** the rotating platform (7) supports the seat frame (2) at the peripheral portions (7"), along which said fixed guides (10') are formed, wherein said central body (7') is not in contact with the cushion portion (3).

2. A motor-vehicle seat (1) according to claim 1, wherein the central body (7') and the peripheral portions (7") of the rotating platform (7) are made in a single piece.

3. A motor-vehicle seat (1) according to any of the previous claims, wherein the locking means (8) comprise a plurality of abutment members (8') mutually engageable with respective latch elements (8") arranged to lock the abutment members (8'), wherein each abutment member (8') is arranged vertically aligned with a respective latch element (8"), in such a way that following the vertical translation of the rotating platform (7), moving away from or approaching the floor (F), they can be mutually released or locked.

4. A motor-vehicle seat (1) according to claim 3, wherein the abutment members (8') protrude from a lower face of the rotating platform (7), for providing connection with latch elements (8") integrated into the floor (F).

5. A motor-vehicle seat (1) according to claim 4, wherein the rotating platform (7) comprises two pairs of abutment members (8'), the abutment members (8') of each pair being spaced apart from each other along one of the sides of the rotating platform (7), below the fixed guides (10').

6. A motor-vehicle seat (1) according to claim 3, wherein the latch elements (8") are integrated with the base portion (6) of the support structure (5), and the abutment members (8') protrude from a lower face of the rotating platform (7).

7. A motor-vehicle seat (1) according to claim 3, wherein the latch elements (8") protrude from a lower face of the rotating platform (7), below the fixed guides (10'), for connection with abutment members (8') integrated into the floor (F).

8. A motor-vehicle seat (1) according to any of the previous claims, wherein the deactivation means (9) are mechanical means comprising a manually operated release command (9'), which includes a mechanical command transmission device.

9. A motor-vehicle seat (1) according to any one of claims 1-7, comprising at least one actuator and control means arranged for automatically releasing the locking means (8), vertically translating the rotating platform (7) and rotating the seat frame (2).

10. A motor-vehicle (V) comprising a seat (1) according to any one of claims 1-9.

## Patentansprüche

1. Kraftfahrzeugsitz (1), umfassend einen Sitzrahmen (2), der um eine vertikale Achse (Z) drehbar auf einem Kraftfahrzeugboden (F) montiert ist,
- wobei der Rahmen (2) einen Sitzkissentteil (3) und einen Rückenlehnenteil (4) umfasst, wobei der Sitzkissentteil (3) an seinem unteren Teil mit einer Trägerstruktur (5) verbunden ist, die einen Basisteil (6) umfasst, der am Boden (F) befestigt werden kann, und eine Drehplattform (7), die den Sitzrahmen (2) trägt und drehbar auf dem Basisteil (6) um die genannte vertikale Achse (Z) montiert ist,
- wobei der Basisteil (6) ein im Wesentlichen plattenförmiges Element (6') umfasst, das am Boden (F) verankert werden kann, von dem zentral ein Säulenabschnitt (6") hervorsteht, der die Drehplattform (7) trägt; wobei die Drehplattform (7) einen zentralen Körper (7') umfasst, der mit dem Säulenabschnitt (6") in Eingriff steht, von dem periphere Abschnitte (7") ausgehen, die zum Tragen des Sitzkissentteils (3) ausgebildet sind,
- wobei die genannte Trägerstruktur (5) miteinander in Eingriff stehende Verriegelungsmittel (8) umfasst, die dazu ausgelegt sind, die Drehplattform (7) in einer gedrehten Position relativ zu einer Normalgebrauchsposition des Sitzes (1) zu verriegeln, wobei den genannten Verriegelungsmitteln (8) Deaktivierungsmittel (9) zugeordnet sind, zum Lösen der Verriegelungsmittel (8) und zum Ermöglichen der Drehung des Sitzrahmens (2),
- wobei die Trägerstruktur (5) so ausgelegt ist, dass sie eine vertikale Verschiebung der Drehplattform (7) relativ zum Basisteil (6) entlang der genannten vertikalen Achse (Z) ermöglicht, die jeweils vorab und anschließend an die Drehung des Sitzes (1) durchgeführt wird, wobei sie sich jeweils vom Boden (F) weg bzw. sich diesem annähert,
- wobei der Sitzrahmen (2) an seinem unteren Teil mit der Drehplattform (7) an Führungsmitteln (10) verbunden ist, zum Einstellen der Position des Sitzes (1) relativ zum Boden (F) entlang der Längsrichtung des Kraftfahrzeugs (V), wobei die genannten Führungsmittel (10) ein Paar fester Führungen (10') umfassen, die an gegenüberliegenden Seiten der Drehplattform (7) ausgebildet sind, und ein Paar beweglicher Führungen (10"), die starr mit dem Sitzkissentteil (3) verbunden und gleitend auf den festen Führungen (10') montiert sind,
**dadurch gekennzeichnet, dass** die Drehplattform (7) den Sitzrahmen (2) an den peripheren Abschnitten (7") trägt, entlang derer die genannten festen Führungen (10') ausgebildet sind, wobei der genannte zentrale Körper (7') nicht mit dem Sitzkissentteil (3) in Kontakt steht.

2. Kraftfahrzeugsitz (1) nach Anspruch 1, wobei der zentrale Körper (7') und die peripheren Abschnitte (7") der Drehplattform (7) einstückig ausgebildet sind.

3. Kraftfahrzeugsitz (1) nach einem der vorhergehenden Ansprüche, wobei die Verriegelungsmittel (8) eine Vielzahl von Anschlagelementen (8') umfassen, die mit jeweiligen Rastelementen (8") gegenseitig in Eingriff bringbar sind, die dazu angeordnet sind, die Anschlagelemente (8') zu verriegeln, wobei jedes Anschlagelement (8') vertikal ausgerichtet zu einem jeweiligen Rastelement (8") angeordnet ist, derart, dass sie infolge der vertikalen Verschiebung der Drehplattform (7), beim Sich-vom-Boden-(F)-Wegbewegen oder Sich-Annähern, gegenseitig gelöst oder verriegelt werden können.

4. Kraftfahrzeugsitz (1) nach Anspruch 3, wobei die Anschlagelemente (8') von einer unteren Fläche der Drehplattform (7) hervorstehen, um eine Verbindung mit im Boden (F) integrierten Rastelementen (8") bereitzustellen.

5. Kraftfahrzeugsitz (1) nach Anspruch 4, wobei die Drehplattform (7) zwei Paare von Anschlagelementen (8') umfasst, wobei die Anschlagelemente (8') jedes Paares entlang einer der Seiten der Drehplattform (7) unterhalb der festen Führungen (10') voneinander beabstandet sind.

6. Kraftfahrzeugsitz (1) nach Anspruch 3, wobei die Rastelemente (8") mit dem Basisteil (6) der Trägerstruktur (5) integriert sind und die Anschlagelemente (8') von einer unteren Fläche der Drehplattform (7) hervorstehen.

7. Kraftfahrzeugsitz (1) nach Anspruch 3, wobei die Rastelemente (8") von einer unteren Fläche der Drehplattform (7) unterhalb der festen Führungen (10') hervorstehen, zur Verbindung mit im Boden (F) integrierten Anschlagelementen (8').

8. Kraftfahrzeugsitz (1) nach einem der vorhergehenden Ansprüche, wobei die Deaktivierungsmittel (9) mechanische Mittel sind, die einen manuell betätigten Freigabebefehl (9') umfassen, der eine mechanische Befehlsübertragungsvorrichtung einschließt.

9. Kraftfahrzeugsitz (1) nach einem der Ansprüche 1-7, umfassend mindestens einen Aktuator und Steuermittel, die zum automatischen Lösen der Verriegelungsmittel (8), zum vertikalen Verschieben der Drehplattform (7) und zum Drehen des Sitzrahmens (2) angeordnet sind.

10. Kraftfahrzeug (V), umfassend einen Sitz (1) nach einem der Ansprüche 1-9.

## Revendications

1. Siège de véhicule automobile (1) comprenant un châssis de siège (2) monté rotatif autour d'un axe vertical (Z) sur un plancher de véhicule automobile (F),
- dans lequel ledit châssis (2) comprend une partie d'assise (3) et une partie de dossier (4), la partie d'assise (3) étant reliée à sa partie inférieure à une structure de support (5) comprenant une partie de base (6), pouvant être fixée au plancher (F), et une plateforme rotative (7) portant le châssis de siège (2) et montée rotative sur la partie de base (6) autour dudit axe vertical (Z),
- dans lequel la partie de base (6) comprend un élément sensiblement en forme de plaque (6'), pouvant être ancré au plancher (F), duquel fait saillie centralement une portion en colonne (6"), portant la plateforme rotative (7) ; la plateforme rotative (7) comprenant un corps central (7') engagé avec la portion en colonne (6"), duquel s'étendent des portions périphériques (7"), configurées pour supporter la partie d'assise (3),
- dans lequel ladite structure de support (5) comprend des moyens de verrouillage (8) s'engageant mutuellement, configurés pour verrouiller la plateforme rotative (7) dans une position tournée par rapport à une position d'utilisation normale du siège (1), des moyens de désactivation (9) étant associés auxdits moyens de verrouillage (8), pour libérer les moyens de verrouillage (8) et permettre la rotation du châssis de siège (2),
- dans lequel la structure de support (5) est configurée pour permettre une translation verticale de la plateforme rotative (7) par rapport à la partie de base (6), le long dudit axe vertical (Z), devant être effectuée préalablement et successivement à la rotation du siège (1), en s'éloignant respectivement du plancher (F) et en s'en rapprochant,
- dans lequel le châssis de siège (2) est relié à sa partie inférieure à la plateforme rotative (7) au niveau de moyens de guidage (10) pour ajuster la position du siège (1) par rapport au plancher (F) le long de la direction longitudinale du véhicule automobile (V), lesdits moyens de guidage (10) comprenant une paire de guides fixes (10') réalisés sur des côtés opposés de la plateforme rotative (7), et une paire de guides mobiles (10") rigidement reliés à la partie d'assise (3) et montés coulissants sur les guides fixes (10'),
**caractérisé en ce que** la plateforme rotative (7) supporte le châssis de siège (2) au niveau des portions périphériques (7"), le long desquelles lesdits guides fixes (10') sont formés, ledit corps central (7') n'étant pas en contact avec la partie d'assise (3).

2. Siège de véhicule automobile (1) selon la revendication 1, dans lequel le corps central (7') et les portions périphériques (7") de la plateforme rotative (7) sont réalisés en une seule pièce.

3. Siège de véhicule automobile (1) selon l'une quelconque des revendications précédentes, dans lequel les moyens de verrouillage (8) comprennent une pluralité d'éléments d'appui (8') pouvant s'engager mutuellement avec des éléments de cliquet respectifs (8") disposés pour verrouiller les éléments d'appui (8'), chaque élément d'appui (8') étant disposé aligné verticalement avec un élément de cliquet respectif (8"), de telle sorte qu'à la suite de la translation verticale de la plateforme rotative (7), en s'éloignant du plancher (F) ou en s'en rapprochant, ils puissent être mutuellement libérés ou verrouillés.

4. Siège de véhicule automobile (1) selon la revendication 3, dans lequel les éléments d'appui (8') font saillie à partir d'une face inférieure de la plateforme rotative (7), pour assurer la connexion avec des éléments de cliquet (8") intégrés dans le plancher (F).

5. Siège de véhicule automobile (1) selon la revendication 4, dans lequel la plateforme rotative (7) comprend deux paires d'éléments d'appui (8'), les éléments d'appui (8') de chaque paire étant espacés l'un de l'autre le long de l'un des côtés de la plateforme rotative (7), au-dessous des guides fixes (10').

6. Siège de véhicule automobile (1) selon la revendication 3, dans lequel les éléments de cliquet (8") sont intégrés à la partie de base (6) de la structure de support (5), et les éléments d'appui (8') font saillie à partir d'une face inférieure de la plateforme rotative (7).

7. Siège de véhicule automobile (1) selon la revendication 3, dans lequel les éléments de cliquet (8") font saillie à partir d'une face inférieure de la plateforme rotative (7), au-dessous des guides fixes (10'), pour la connexion avec des éléments d'appui (8') intégrés dans le plancher (F).

8. Siège de véhicule automobile (1) selon l'une quelconque des revendications précédentes, dans lequel les moyens de désactivation (9) sont des moyens mécaniques comprenant une commande de libération actionnée manuellement (9'), qui comprend un dispositif mécanique de transmission de commande.

9. Siège de véhicule automobile (1) selon l'une quelconque des revendications 1 à 7, comprenant au moins un actionneur et des moyens de commande disposés pour libérer automatiquement les moyens de verrouillage (8), effectuer la translation verticale de la plateforme rotative (7) et faire tourner le châssis de siège (2).

10. Véhicule automobile (V) comprenant un siège (1) selon l'une quelconque des revendications 1 à 9.
